(19) Europäisches Patentamt
European Patent Office
Office européen des brevets

(11) **EP 2 341 433 A2**

(12) **DEMANDE DE BREVET EUROPEEN**

(43) Date de publication:
**06.07.2011 Bulletin 2011/27**

(51) Int Cl.:
**G06F 11/00** *(2006.01)*

(21) Numéro de dépôt: **10290346.5**

(22) Date de dépôt: **28.06.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **30.06.2009 FR 0954465**

(71) Demandeur: **Baczko, Aleksander 91400 Orsay (FR)**

(72) Inventeur: **Baczko, Aleksander 91400 Orsay (FR)**

(54) **Procédé et dispositif de mesure d'un indicateur de disponibilité pour un système ou un service technique**

(57) La présente invention concerne un procédé de mesure d'une disponibilité pour un système ou un service technique, comprenant une mesure d'un état d'un élément du système ou service technique, l'état mesuré étant à un niveau d'état parmi plusieurs niveaux d'état distincts (N1, N2, N3), caractérisé en ce qu'il comprend en outre, pour au moins un des niveaux d'état (N1 ; N2 ; N3), un calcul d'un indicateur (15 ; 16 ; 17) de disponibilité de l'élément spécifique à ce niveau d'état, l'indicateur de disponibilité spécifique à ce niveau d'état étant calculé pour des pannes pour lesquelles l'élément tombe en panne à ce niveau d'état (N1 ; N2 ; N3). Un tel indicateur est plus pertinent et réaliste que ceux proposés par l'état de la technique antérieur. L'invention concerne aussi un dispositif mettant en oeuvre ce procédé. L'invention concerne plus particulièrement mais de manière non limitative l'aide à la décision et la fourniture de recommandations opérationnelles et anticipatives d'utilisation d'un système ou d'un service technique.

FIG. 6

EP 2 341 433 A2

**Description**

Domaine technique

La présente invention concerne un procédé pour mesurer une disponibilité d'un système ou d'un service technique. Elle concerne aussi un dispositif mettant en oeuvre ce procédé.
La disponibilité est un des attributs permettant de caractériser une sûreté de fonctionnement d'un système ou d'un service technique. La disponibilité permet notamment de caractériser la propriété qu'a un système de délivrer correctement un service au moment où un utilisateur en a besoin, notamment en termes de délais et de qualité..
L'invention concerne plus particulièrement mais de manière non limitative l'aide à la décision et la fourniture de recommandations opérationnelles et anticipatives d'utilisation d'un système ou d'un service technique.

Etat de la technique antérieure

On connaît la demande de brevet FR 2 915 593 qui décrit un procédé et un dispositif de calcul d'un indicateur de disponibilité.
Le but de la présente invention est de proposer un procédé et un dispositif de mesure de disponibilité comprenant un calcul d'un indicateur de disponibilité plus pertinent ou réaliste par l'état de la technique antérieure.

Exposé de l'invention

Cet objectif est atteint avec un procédé de mesure d'une disponibilité pour un système ou un service technique, comprenant :

- une mesure d'un état d'un élément du système ou service technique, l'état mesuré étant à un niveau d'état parmi plusieurs niveaux d'état distincts,

**caractérisé en ce qu**'il comprend en outre :

- pour au moins un des niveaux d'état, de préférence pour chaque niveau d'état parmi les plusieurs niveaux d'état distincts c'est à dire pour chacun des niveaux d'état définis pour cet élément, un calcul d'un indicateur de disponibilité de l'élément spécifique à ce niveau d'état, l'indicateur de disponibilité spécifique à ce niveau d'état étant calculé pour des pannes pour lesquelles l'élément tombe en panne en étant à ce niveau d'état.

Dans ce document, l'expression « tomber en panne » pour un élément signifie que cet élément entre dans un état de panne, une panne de cet élément pouvant être volontaire (arrêt volontaire du système ou service pour une réparation de l'élément) ou involontaire (« panne franche») de la part de l'utilisateur du système ou service.
L'état de panne d'un système ou service peut être considéré comme une dégradation sévère de fonctionnement ou un arrêt de fonctionnement (une « panne franche ») du système ou service mais aussi comme un arrêt de fonctionnement volontaire par l'utilisateur de ce système ou service pour anticiper une panne franche et/ou pour effectuer des opérations de révision, d'échange, de réparation ou de ravitaillement de l'élément en panne.
L'indicateur de disponibilité spécifique à un niveau d'état est de préférence calculé en fonction :

- d'un temps moyen entre deux pannes successives de cet élément lorsque cet élément tombe en panne à ce niveau d'état, et
- d'un temps moyen de réparation d'une panne de cet élément pour laquelle cet élément est tombé en panne à ce niveau d'état.

L'indicateur de disponibilité spécifique à un niveau d'état est de préférence calculé en fonction du rapport entre d'une part le temps moyen entre deux pannes et d'autre part la somme du temps moyen entre deux pannes et du temps moyen de réparation.
Le procédé selon l'invention peut comprendre en outre, pour au moins un des niveaux d'état, de préférence pour chaque niveau d'état, une comparaison entre l'indicateur de disponibilité calculé spécifique à ce niveau d'état et un indicateur de disponibilité standard. En particulier, après chaque réparation de panne pour laquelle l'élément est tombé en panne à un niveau d'état donné, on compare de préférence l'indicateur de disponibilité calculé spécifique à ce niveau d'état avec un indicateur de disponibilité standard spécifique à ce niveau d'état. Le procédé selon l'invention peut comprendre une obtention d'un résultat de la comparaison entre l'indicateur de disponibilité calculé spécifique à ce niveau d'état et l'indicateur de disponibilité standard, le résultat comprenant le fait que la disponibilité calculée spécifique à ce niveau d'état est plus grande ou moins grande que la disponibilité standard, et peut comprendre en outre une communication à un utilisateur du système ou service d'un message qui dépend de ce résultat.

Le procédé selon l'invention peut comprendre en outre un calcul d'un indicateur de disponibilité de l'élément non spécifique à l'un quelconque des niveaux d'état. Le procédé selon l'invention peut comprendre en outre une comparaison entre l'indicateur de disponibilité calculé non spécifique et un indicateur de disponibilité standard.

Le procédé selon l'invention peut comprendre en outre, pour au moins un des niveaux d'état, de préférence pour chaque niveau d'état, une comparaison entre l'indicateur de disponibilité calculé non spécifique et l'indicateur de disponibilité calculé spécifique à ce niveau d'état.

De manière préférentielle, le calcul d'un indicateur de disponibilité de l'élément comprend un calcul d'un indicateur de disponibilité spécifique à un niveau d'état recommandé pour une réparation de l'élément, le procédé comprenant en outre une comparaison entre l'indicateur de disponibilité spécifique au niveau d'état recommandé et un indicateur de disponibilité standard. Le procédé selon l'invention peut comprendre une obtention d'un résultat de la comparaison entre l'indicateur de disponibilité spécifique au niveau d'état recommandé et l'indicateur de disponibilité standard, le résultat comprenant le fait que la disponibilité spécifique au niveau d'état recommandé est plus grande ou moins grande que la disponibilité standard, et une communication à un utilisateur du système ou service d'un message qui dépend de ce résultat. En outre, le procédé selon l'invention peut comprendre en outre un calcul d'un indicateur de disponibilité de l'élément non spécifique à un niveau d'état, et peut comprendre en outre une comparaison entre l'indicateur de disponibilité non spécifique et l'indicateur de disponibilité standard. Finalement, le procédé selon l'invention peut comprendre en outre une comparaison entre l'indicateur de disponibilité non spécifique et l'indicateur de disponibilité spécifique au niveau d'état recommandé.

De manière préférentielle, dans le cas d'un système, chaque calcul d'indicateur de disponibilité spécifique à un niveau d'état est local et effectué au niveau du système.

Le procédé selon l'invention peut comprendre en outre, pour au moins un des niveaux d'états, de préférence pour chaque niveau d'état, une mise à jour de l'indicateur de disponibilité standard spécifique à ce niveau d'état en fonction de l'indicateur de disponibilité spécifique à ce niveau d'état calculé pour le système ou service et de préférence en outre en fonction de l'indicateur de disponibilité spécifique à ce niveau d'état calculé pour d'autres systèmes ou services du même type.

Le procédé selon l'invention peut comprendre en outre, pour au moins un des niveaux d'états, de préférence pour chaque niveau d'état :

- une réception et un enregistrement d'une valeur de l'indicateur de disponibilité standard spécifique à ce niveau d'état, proposée par un constructeur du système ou fournisseur du service et validée par un centre de validation et de labellisation, et
- un renvoi, vers ce constructeur ou fournisseur ou centre de validation et de labellisation, d'une valeur de l'indicateur de disponibilité calculée spécifique à ce niveau d'état pour mettre à jour la valeur de l'indicateur standard.

Le procédé selon l'invention peut comprendre en outre une déduction d'une recommandation d'utilisation du système ou service, et peut comprendre en outre une communication de la recommandation à un utilisateur du système ou service, cette recommandation étant de préférence opérationnelle et anticipative.

Suivant encore un autre aspect de l'invention, il est proposé un dispositif de mesure d'une disponibilité pour un système ou un service technique, comprenant :

- des moyens pour mesurer un état d'un élément du système ou service technique, l'état mesuré étant à un niveau d'état parmi plusieurs niveaux d'état distincts,

**caractérisé en ce qu'**il comprend en outre :

- pour au moins un des niveaux d'état, de préférence pour chaque niveau d'état, des moyens pour calculer un indicateur de disponibilité de l'élément spécifique à ce niveau d'état, l'indicateur de disponibilité spécifique à ce niveau d'état étant calculé pour des pannes pour lesquelles l'élément tombe en panne à ce niveau d'état.

Les moyens de calcul sont de préférence agencés pour calculer l'indicateur de disponibilité spécifique à un niveau d'état en fonction :

- d'un temps moyen entre deux pannes successives de cet élément lorsque cet élément tombe en panne à ce niveau d'état, et
- d'un temps moyen de réparation d'une panne de cet élément pour laquelle cet élément est tombé en panne à ce niveau d'état.

Les moyens de calcul sont de préférence agencés pour calculer l'indicateur de disponibilité spécifique à un niveau d'état en fonction du rapport entre d'une part le temps moyen entre deux pannes et d'autre part la somme du temps moyen entre deux pannes et du temps moyen de réparation.

Le dispositif selon l'invention peut comprendre en outre, pour au moins un des niveaux d'état, de préférence pour chaque niveau d'état, des moyens pour comparer l'indicateur de disponibilité calculé par les moyens de calcul et spécifique à ce niveau d'état et un indicateur de disponibilité standard. En particulier, les moyens de comparaison sont de préférence agencés pour, après chaque réparation de panne pour laquelle l'élément est tombé en panne à un niveau d'état donné, comparer l'indicateur de disponibilité calculé par les moyens de calcul et spécifique à ce niveau d'état avec un indicateur de disponibilité standard spécifique à ce niveau d'état. Le dispositif selon l'invention peut comprendre des moyens pour obtenir un résultat de comparaison entre l'indicateur de disponibilité calculé par les moyens de calcul et spécifique à ce niveau d'état et l'indicateur de disponibilité standard, le résultat comprenant le fait que la disponibilité calculée spécifique à ce niveau d'état est plus grande ou moins grande que la disponibilité standard, et peut comprendre en outre des moyens pour communiquer à un utilisateur du système ou service d'un message qui dépend de ce résultat.

Le dispositif selon l'invention peut comprendre en outre des moyens pour calculer un indicateur de disponibilité de l'élément non spécifique à l'un quelconque des niveaux d'état. Le dispositif selon l'invention peut comprendre en outre des moyens pour comparer l'indicateur de disponibilité non spécifique calculé par les moyens de calcul et un indicateur de disponibilité standard.

Le dispositif selon l'invention peut comprendre en outre, pour au moins un des niveaux d'état, de préférence pour chaque niveau d'état, des moyens pour comparer l'indicateur de disponibilité non spécifique calculé par les moyens de calcul et l'indicateur de disponibilité spécifique à ce niveau d'état calculé par les moyens de calcul.

Le dispositif selon l'invention peut comprendre en outre, pour au moins un des niveaux d'états, de préférence pour chaque niveau d'état, des moyens pour mettre à jour l'indicateur de disponibilité standard spécifique à ce niveau d'état en fonction de l'indicateur de disponibilité spécifique à ce niveau d'état calculé pour le système ou service et de préférence en outre en fonction de l'indicateur de disponibilité spécifique à ce niveau d'état calculé pour d'autres systèmes ou services du même type.

Le dispositif selon l'invention peut comprendre en outre, pour au moins un des niveaux d'états, de préférence pour chaque niveau d'état :

- des moyens pour recevoir et enregistrer une valeur de l'indicateur de disponibilité standard spécifique à ce niveau d'état, proposée par un constructeur du système ou fournisseur du service et validée par un centre de validation et de labellisation, et
- des moyens pour renvoyer vers ce constructeur ou fournisseur ou centre de validation et de labellisation, une valeur de l'indicateur de disponibilité calculée spécifique à ce niveau d'état pour mettre à jour la valeur de l'indicateur standard.

Enfin, le dispositif selon l'invention peut comprendre en outre des moyens pour déduire une recommandation d'utilisation du système ou service.

Description des figures et modes de réalisation

D'autres avantages et particularités de l'invention apparaîtront à la lecture de la description détaillée de mises en oeuvre et de modes de réalisation nullement limitatifs, et des dessins annexés suivants :

- la figure 1 illustre un mode de réalisation préférentiel de dispositif 1 selon l'invention,
- les figures 2 à 6 illustrent des calculs, mises à jour et comparaisons de différents indicateurs de disponibilités en fonction du temps dans un procédé selon l'invention mis en oeuvre par le dispositif de la figure 1, et
- la figure 7 illustre des connexions du dispositif de la figure 1 avec différentes bases de données.

La description qui suit prend l'exemple particulier de mesure de disponibilité pour un système technique correspondant à un véhicule automobile, mais peut être étendue de manière générale à tout type de système ou service technique.

Par la suite, on entend par « disponibilité » d'un système ou d'un service le rapport entre d'une part une durée durant laquelle ledit système ou service est opérationnel, et d'autre part une durée totale durant laquelle on aurait souhaité que ledit système ou service soit opérationnel. Autrement dit, la disponibilité est le rapport d'un temps de fonctionnement pendant lequel le système ou service est opérationnel, sur un temps total d'exécution ou d'existence dudit système ou service. Dans ce document, on entend par « indicateur de disponibilité » d'un système ou d'un service un indicateur ou une donnée qui dépend ou qui est représentative de cette disponibilité et donc de ce rapport. L'indicateur de disponibilité peut par exemple être égal à la disponibilité ou peut dépendre de façon proportionnelle, quadratique, exponentielle ou logarithmique de la disponibilité.

Par la suite, on entend par l'« état » d'un élément de préférence un état d'une caractéristique de cet élément qui influe sur la fonction technique de cet élément au sein du système ou service, de préférence un état d'usure, de dégradation, de détérioration, ou de performance. Par exemple, dans le cas où le système est un véhicule automobile, l'état d'usure d'un élément « carburant » est la quantité de carburant restant dans le système, l'état d'usure d'un élément « plaquettes de frein » est leurs épaisseurs, l'état d'usure d'un élément « pneu » est la profondeur des rainures du pneu. En outre, dans un exemple où le service est un service d'accès haut débit à Internet comprenant une « set top box » avec un modem ADSL, un modem Wi-FI et un décodeur TVoIP, l'état d'usure ou de performance du modem Wi-FI est le débit de la connexion Wi-FI en Mbits par seconde, et l'état d'usure ou de performance du décodeur TVoIP est le nombre d'arrêts sur image par minute du signal transmis par le décodeur sur un écran de télévision.

Par la suite, on entend par « panne » d'un élément, de préférence un événement pendant lequel au moins une fonction du système ou service n'est pas opérationnelle du fait de cet élément. Une panne peut être volontaire de la part de l'utilisateur du système ou service : par exemple, si le système est un véhicule automobile, l'utilisateur peut volontairement immobiliser son véhicule le temps de faire sont plein de carburant ou peut volontairement aller changer ses plaquettes de frein dans un garage s'il entend un bruit suspect en freinant ou aller changer un de ses pneus. Une panne peut être involontaire de la part de l'utilisateur du système ou service, on parle alors de « panne franche »: par exemple, si le système est un véhicule automobile, le réservoir de carburant peut devenir entièrement vide, les freins peuvent ne plus fonctionner, un pneu peut éclater. En outre, dans un exemple de service de fourniture d'accès haut débit à Internet, une panne du modem Wi-FI est l'impossibilité de se connecter à la set top box via la connexion Wi-FI (débit nul), et une panne du décodeur TVoIP peut être une absence ou un blocage du signal transmis par le décodeur sur un écran de télévision, et le modem ADSL ou la « set top box » peuvent aussi tomber en panne.

Par la suite, on entend par « réparation » d'un élément, de préférence une action permettant une amélioration de l'état de cet élément qui est en panne, de préférence jusqu'à un niveau d'usure optimal. Une réparation peut comprendre un remplacement, un ravitaillement ou une révision de cet élément. La durée d'une réparation est de préférence toute la durée pendant laquelle cet élément est dans une panne. Par exemple, si le système est un véhicule automobile, la durée d'une réparation peut être une durée d'immobilisation dans une station essence le temps de faire le plein de carburant, ou une durée d'immobilisation du véhicule dans un garage pour changer les plaquettes de frein ou un pneu. En outre, dans un exemple où le système est un module « set top box » de connexion ADSL, la durée d'une réparation peut être une durée d'une réinitialisation de la set top box.

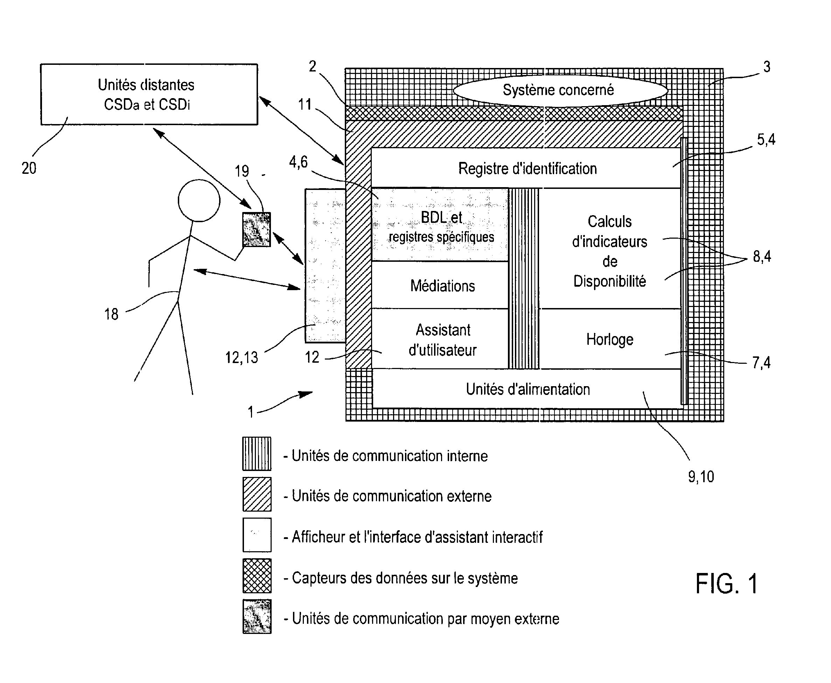

On va tout d'abord décrire, en référence à la figure 1, un dispositif 1 selon invention. Le dispositif 1 comprend :

- plusieurs capteurs, chaque capteur étant relié à un élément d'un système technique 3 et étant agencé pour mesurer un état de cet élément ; dans cet exemple nullement limitatif, le système technique 3 considéré est un véhicule automobile comprenant parmi ses éléments des plaquettes de frein, et le dispositif 1 comprend, parmi ses capteurs, un capteur 2 relié à l'élément « plaquettes de frein » de ce véhicule 3, l'état des plaquettes de frein correspondant à l'état d'usure de ces plaquettes c'est-à-dire à l'épaisseur en millimètre de ces plaquettes ; pour simplifier cet exemple, on considère que l'usure de chacune des plaquettes est sensiblement la même, et que l'ensemble des plaquettes forment donc un unique élément technique du système 3,
- un ordinateur spécialisé 4, comprenant :

    ○ un registre 5 d'identification du système 3, dans lequel sont enregistrées des données d'identification du système tels que la marque et le type du véhicule automobile 3, le numéro de série et la date de mise en marche du véhicule 3, le nom du propriétaire du véhicule 3, ...
    ○ une horloge interne 7 synchronisée avec un référentiel de temps du système 3,
    ○ une base de données locale BDL 6, comprenant pour chaque élément dont le dispositif 1 mesure l'état un registre spécifique à cet élément, dans lequel est noté chaque événement relatif cet élément et le moment ou la durée de cet événement ; le moment ou la durée de chaque événement est déterminé au moyen de l'horloge interne 7 ; les événements relatifs à un élément comprennent par exemple une ou chaque mesure d'état par le capteur relié à cet élément, une ou chaque panne de cet élément, une ou chaque réparation de cet élément, ...
    o une unité de calcul et d'analyse 8, agencée pour calculer et mettre à jour des indicateurs de disponibilités spécifiques et non spécifiques pour chacun des éléments dont le dispositif 1 mesure l'état comme décrit par la suite, et des indicateurs de disponibilités globales comme décrit par la suite ; chaque indicateur étant calculé de façon régulière après des pannes et leurs réparations, chaque calcul d'un indicateur comprend une mise à jour de cet indicateur.

- une unité d'alimentation principale 9 pour alimenter le dispositif 1 en énergie et une unité d'alimentation de secours 10 pour alimenter le dispositif 1 en énergie en cas de panne de l'unité 9;
- des moyens de communication 11 agencés pour communiquer avec l'extérieur du dispositif 1, notamment avec les CSDa, CSDi ,les BDI et la BDC décrits par la suite ;
- des moyens 12 pour communiquer avec un utilisateur 18 du système 3, comprenant un module d'assistance à l'utilisateur. Ce module d'assistance communique localement des informations sous forme sonore, visuelle, et comprend un afficheur interactif 13, comprend en outre des moyens pour communiquer à distance avec un utilisateur ou un propriétaire 18 du système 3 comprenant par exemple des moyens pour appeler un téléphone portable 19 de l'utilisateur 18.

Le dispositif 1 est solidaire du système 3, et est donc agencé pour calculer localement les indicateurs de disponibilité, c'est-à-dire qu'il est agencé pour calculer les indicateurs de disponibilité du système 3 à l'endroit même de ce système 3, sans nécessiter de transmission de données à un centre de calcul distant.

Chaque capteur relié à un élément du système 3 mesure un état de cet élément. En particulier, le capteur 2 mesure l'état d'usure des plaquettes de frein, plus précisément l'épaisseur en millimètres des plaquettes de frein.

Chaque état d'un élément est mesuré de façon quantificative, et est à un niveau d'état parmi plusieurs niveaux d'états possibles distincts de cet élément dont :

- un niveau 1 correspondant à un état de fonctionnement optimal de cet élément, pour lequel l'état de l'élément est conforme à des exigences et à des spécifications de fonctionnement, correspondant de préférence à un état d'usure ou de performance ayant un écart inférieur à 30% par rapport à l'état d'usure ou de performance de cet élément lorsqu'il est neuf ;
- un niveau 2 correspondant à un état de fonctionnement légèrement dégradé de cet élément, pour lequel cet élément devrait être remplacé ou réparé selon les recommandations du constructeur ou fournisseur du système 3, correspondant de préférence à un état d'usure ou de performance ayant un écart compris entre 30% et 60% par rapport à l'état d'usure ou de performance de cet élément lorsqu'il est neuf ;
- un niveau 3 correspondant à un état de fonctionnement fortement dégradé de cet élément, pour lequel cet élément est susceptible de tomber en panne et/ou représente un danger pour le système 3 ou pour une utilisation du système, correspondant de préférence à un état d'usure ou de performance ayant un écart compris entre 60% et 100% par rapport à l'état d'usure ou de performance de cet élément lorsqu'il est neuf.

Les niveaux d'états sont distincts mais se succèdent et sont séparés par des seuils. Les états mesurés par les capteurs sont enregistrés dans la base de données locale BDL 6 et sont traités et analysés par l'unité 8. En particulier, l'unité 8 est agencée pour détecter lorsqu'un état mesuré franchi un seuil, c'est-à-dire lorsqu'un état mesuré passe d'un niveau d'état à un autre niveau d'état. Les moyens 12, 13 sont agencés pour prévenir l'utilisateur du système 3 lorsqu'un état mesuré d'un élément franchi un seuil, en particulier lorsque l'état mesuré entre dans un niveau d'état pour lequel il est recommandé de remplacer ou réparer cet élément. De préférence l'utilisateur valide la réception de chaque indication ou message reçue sur les moyens 12,13.

En particulier, l'état d'usure des plaquettes de frein est mesuré de façon quantificative, et est à un niveau d'état parmi plusieurs niveaux d'états possibles distincts de cet élément dont :

- un niveau 1 correspondant à un état de fonctionnement optimal des plaquettes, pour lequel l'épaisseur des plaquettes est conforme à des exigences et à des spécifications de fonctionnement, correspondant de préférence à une épaisseur des plaquettes ayant un écart inférieur à 30% par rapport à l'épaisseur de plaquettes neuves ; le temps de réparation des plaquettes dans le niveau 1 est sensiblement constant, et sensiblement égal au temps de réparation des plaquettes dans le niveau 2 ($MTTRn_1 \approx MTTRn_2$); on recommande de ne pas changer les plaquettes dans leur niveau 1, car cela correspondrait à un temps de bon fonctionnement trop court ;
- un niveau 2 correspondant à un état de fonctionnement légèrement dégradé des plaquettes, pour lequel les plaquettes devraient être remplacées, correspondant de préférence à une épaisseur des plaquettes ayant un écart compris entre 30% et 60% par rapport à l'épaisseur de plaquettes neuves ; le temps de réparation de plaquettes dans le niveau 2 est sensiblement constant, car la réparation consiste en un remplacement des plaquettes à priori sans complications ; le constructeur ou fournisseur recommande de changer les plaquettes dans leur niveau 2 ;
- un niveau 3 correspondant à un état de fonctionnement fortement dégradé des plaquettes, pour lequel les plaquettes sont susceptibles d'endommager les disques de freinage du véhicule ou de ne plus permettre au véhicule de freiner, correspondant de préférence à une épaisseur des plaquettes ayant un écart compris entre 60% et 100% par rapport à l'épaisseur de plaquettes neuves ; on recommande de ne pas changer les plaquettes dans leur niveau 3 car en remplaçant les plaquettes au niveau d'usure n°3, les disques de freinage risquent eux aussi d'être endommagés ce qui peut induire des temps de réparation très longs ($MTTRn_3$ très élevé et supérieur à $MTTRn_1$ et $MTTRn_2$).

Les moyens 12, 13 sont agencés pour communiquer et/ou afficher à l'utilisateur 18 le niveau d'état mesuré de chacun des éléments du système 3. De préférence l'utilisateur valide la réception de chaque indication ou message reçue sur les moyens 12,13.

Disponibilité d'un élément indépendante du niveau d'état de cet élément.

Pour chacun des éléments dont l'état est mesuré par un des capteurs, l'unité 8 calcule et met à jour au moins un indicateur de disponibilité de cet élément sous la forme d'un indicateur de disponibilité sans dimension noté D et exprimé en unité 'HeB' (en référence aux travaux du Dr. Henryk Baczko, notamment à l'indicateur et à l'unité de disponibilité proposés dans sa thèse en 1975) selon la formule suivante :

$$D = -10^4 \log K_g \qquad (1)$$

avec D = 1 HeB pour $K_g$ = 0,9998
où $K_g$ est la disponibilité, définie comme suit :

$$K_g = \frac{MTBF}{MTBF + MTTR}$$

où MTBF est un temps moyen entre deux pannes successives de l'élément considéré, c'est-à-dire un temps moyen entre la fin d'une panne initiale de cet élément et le début d'une autre panne de cet élément immédiatement successive à la panne initiale (c'est-à-dire sans panne intermédiaire de cet élément entre la panne initiale et l'autre panne);
et où MTTR est un temps moyen de réparation d'une panne de l'élément considéré, c'est-à-dire le temps moyen entre le début d'une panne de cet élément et la fin de cette même panne ;
$K_g$ étant donc compris entre 0 et 1.

Dans ce document, « log » représente le logarithme décimal aussi appelé logarithme de base dix.

En unités HeB, c'est-à-dire selon le mode de calcul de la formule 1, plus l'indicateur D d'un élément est grand, moins bonne (c'est-à-dire moins grande) est la disponibilité de cet élément.

La mise à jour de l'indicateur de disponibilité D d'un élément est mis en oeuvre pour chaque panne de cet élément, juste après la réparation de cette panne :

- qui a débuté après un temps de bon fonctionnement TBF suivant la réparation de cet élément la plus récente de cette panne, et
- qui a nécessité un temps de réparation TR,

et est précédée d'une mise à jour des valeurs de MTBF et de MTTR qui sont utilisées pour calculer l'indicateur D. La mise à jour de MTBF et de MTTR est calculée par l'unité 8 selon les formules suivantes :

$$MTBF = (MTBF' + TBF)/(N + 1) \qquad (2)$$

et

$$MTTR = (MTTR' + TR)/(N + 1) \qquad (3)$$

où MTBF' est la valeur de MTBF avant sa mise à jour et donc avant cette panne,
MTTR' est la valeur de MTTR avant sa mise à jour et donc avant cette panne,
et où N est le nombre de périodes d'observation (c'est à dire le nombre de cycles comprenant une panne et une réparation de cet élément) avant cette panne utilisé pour calculer la valeur MTBF' précédente.

On distingue notamment deux cas $Dc_i$ et $Df_i$ d'indicateur D.

Si l'élément considéré est un composant n˚i, noté $c_i$, d'importance vitale ou primordiale pour réaliser une ou plusieurs fonctions du système 3, l'unité 8 calcule un « indicateur de disponibilité du composant $c_i$ », noté $Dc_i$. Les valeurs $Dc_i$ de chaque composant du système sont calculées de façon indépendante. Un exemple de composant dans le domaine des véhicules (voiture, avion, train, bateau, ...) est par exemple le moteur du véhicule.

L'unité 8 calcule chaque indicateur de disponibilité $Dc_i$ du composant i selon la formule suivante :

$$Dc_i = -10^4 \log [MTBFc_i/(MTBFc_i + MTTRc_i)] \qquad (4)$$

où $MTBFc_i$ est le temps moyen entre deux pannes successives du composant $c_i$, c'est-à-dire le temps moyen entre la fin d'une panne initiale de cet élément et le début d'une autre panne de cet élément immédiatement successive à la panne initiale (c'est-à-dire sans panne intermédiaire de cet élément entre la panne initiale et l'autre panne);
et où $MTTRc_i$ est le temps moyen de réparation d'une panne du composant $c_i$, c'est-à-dire le temps moyen entre le début d'une panne de cet élément et la fin de cette même panne.

Les valeurs des indicateurs $Dc_i$ entrent dans la valeur l'indicateur de disponibilité globale des composants Dc.

Pour un système organisé en n composants indépendants $c_i$, i étant un entier allant de 1 à n, Dc est calculé par l'unité 8 comme la somme des indicateurs de disponibilités Dci de l'ensemble des composants du système 3:

$$Dc = Dc_1 + \ldots + Dc_i + \ldots + Dc_n \qquad (5)$$

Pour les composants dépendants ou redondés, l'indicateur global de composant Dc est calculé en calculant des valeurs équivalentes selon des formules connues pour des composants disposés en série ou en parallèle.

Si l'élément considéré est une fourniture n˚i, notée $f_i$, de type consommable ou d'alimentation ou d'usage à court terme dans le cycle global du système 3, mais indispensable pour le fonctionnement du système 3, l'unité 8 calcule un « indicateur de disponibilité fonctionnelle de la fourniture $f_i$», noté $Df_i$. Les valeurs $Df_i$ de chaque fourniture sont calculées de façon indépendante. Des exemples de fourniture dans le domaine des véhicules (voiture, avion, ...) sont le carburant, les lubrifiants, les pneus, les plaquettes de frein.

L'unité 8 calcule chaque indicateur de disponibilité $Df_j$ de la fourniture $f_i$ selon la formule suivante :

$$Df_i = -10^4 \log [MTBFf_i/(MTBFf_i + MTTRf_i)] \qquad (6)$$

où $MTBFf_i$ est le temps moyen entre deux pannes successives de la fourniture $f_i$, c'est-à-dire le temps moyen entre la fin d'une panne initiale de cet élément et le début d'une autre panne de cet élément immédiatement successive à la panne initiale (c'est-à-dire sans panne intermédiaire de cet élément entre la panne initiale et l'autre panne);
et où $MTTRf_i$ est le temps moyen de réparation d'une panne de la fourniture $f_i$, c'est-à-dire le temps moyen entre le début d'une panne de cet élément et la fin de cette même panne.

Les valeurs des indicateurs $Df_i$ entrent dans la valeur l'indicateur de disponibilité globale fonctionnelle Df.

Pour un système comprenant m fournitures indépendantes $f_i$, i étant un entier allant de 1 à m, Df est calculé par l'unité 8 comme la somme des indicateurs de disponibilité Dfi de l'ensemble des fournitures du système 3, et est calculé par l'unité 8 selon la formule suivante :

$$Df = Df_1 + \ldots + Df_i + \ldots + Df_m. \qquad (7)$$

Pour les composants dépendants ou redondés, l'indicateur global de disponibilité fonctionnelle Df est calculé en calculant des valeurs équivalentes selon des formules connues pour des composants disposés en série ou en parallèle.

L'indicateur de disponibilité globale générale Dg prend en compte l'ensemble des composants et éléments fonctionnels du système. En général, Dg est calculé par l'unité 8 comme la somme des indicateurs de disponibilité D de l'ensemble des éléments du système 3, et est calculé par l'unité 8 selon la formule suivante :

$$Dg = Dc + Df \qquad (8)$$

Les indicateurs D, $Dc_i$, $Df_i$, Dc, Df et Dg sont indépendants des niveaux d'état, c'est-à-dire qu'ils sont non spécifiques à l'un quelconque des niveaux d'état du ou des éléments concerné(s) par chacun de ces indicateurs.

Disponibilité d'un élément spécifique à un niveau d'état de cet élément.

En outre, pour chacun des éléments (composant ou fourniture) dont l'état est mesuré par un des capteurs et pour chacun des niveaux d'état possibles de cet élément, l'unité 8 calcule pour cet élément un indicateur de disponibilité spécifique à ce niveau d'état, l'indicateur de disponibilité spécifique à ce niveau d'état étant calculé uniquement pour des pannes pour lesquelles l'élément tombe en panne à ce niveau d'état. Ainsi, l'unité 8 calcul pour chaque élément un indicateur de disponibilité spécifique au niveau 1, un indicateur de disponibilité spécifique au niveau 2, et un indicateur de disponibilité spécifique au niveau 3.

L'indicateur de disponibilité d'un élément et spécifique au niveau $j$ ($j$ étant un entier compris entre 1 et N, N étant le nombre de niveaux d'état possibles pour cet élément) est notée $Dn_j$. Les valeurs de $Dn_j$ sont calculées de façon indépendante entre elles.

L'unité 8 calcule chaque indicateur de disponibilité $Dn_j$ de cet élément selon la formule suivante :

$$Dn_j = -10^4 \log [MTBFn_j/(MTBFn_j + MTTRn_j)] \qquad (9)$$

$$Dn_j = -10^4 \log\left[\frac{MTBFn_j}{MTBFn_j + MTTRn_j}\right]$$

où $MTBFn_j$ est le temps moyen entre deux pannes successives de cet élément lorsque cet élément tombe en panne au niveau $j$, c'est-à-dire le temps moyen entre :

- la fin d'une panne initiale quelconque de cet élément (cet à dire une panne initiale pour laquelle cet élément est tombé en panne à n'importe quel niveau d'état) et
- le début d'une autre panne de cet élément immédiatement successive à la panne initiale (c'est-à-dire sans panne intermédiaire de cet élément entre la panne initiale et l'autre panne) et pour laquelle cet élément tombe en panne au niveau $j$;

et où $MTTRn_j$ est le temps moyen de réparation d'une panne de cet élément pour laquelle cet élément est tombé en panne au niveau $j$, c'est-à-dire le temps moyen entre la début d'une panne de cet élément pour laquelle cet élément est tombé en panne au niveau $j$ et la fin de cette même panne.

Ainsi, la disponibilité d'un élément et spécifique au niveau $j$ est le rapport $[MTBFn_j/(MTBFn_j + MTTRn_j)]$, et l'indicateur de disponibilité d'un élément et spécifique au niveau $j$ dépend ou est représentatif de cette disponibilité spécifique. Dans cet exemple, cet indicateur $Dn_j$ dépend de ce rapport de façon logarithmique, mais dans d'autres variantes l'indicateur $Dn_j$ peut dépendre de ce rapport de façon égalitaire, proportionnelle, quadratique, ou exponentielle.

La mise à jour de l'indicateur de disponibilité $Dn_j$ d'un élément est mis en oeuvre pour chaque panne de cet élément pour laquelle cet élément tombe en panne au niveau d'état n°$j$, juste après la réparation de cette panne :

- qui a débuté après un temps de bon fonctionnement $TBFn_j$ suivant la réparation de cet élément la plus récente de cette panne, et
- qui a nécessité un temps de réparation $TRn_j$,

et est précédée d'une mise à jour des valeurs de $MTBFn_j$ et de $MTTRn_j$ qui sont utilisées pour calculer l'indicateur $Dn_j$. La mise à jour de $MTBFn_j$ et de $MTTRn_j$ est calculée par l'unité 8 selon les formules suivantes :

$$MTBF'n_j = (MTBF'n_j + TBFn_j)/(N +1) \qquad (10)$$

et

$$MTTRn_j = (MTTR'n_j + TRn_j)/(N + 1) \qquad (11)$$

où $MTBF'n_j$ est la valeur de $MTBF'n_j$ avant sa mise à jour et donc avant cette panne,
$MTTR'n_j$ est la valeur de $MTTRn_j$ avant sa mise à jour et donc avant cette panne,
et où N est le nombre de périodes d'observation (c'est à dire le nombre de réparation de pannes pour lesquelles cet élément est tombé en panne au niveau j) avant cette panne utilisé pour calculer la valeur $MTBF'n_j$ précédente.

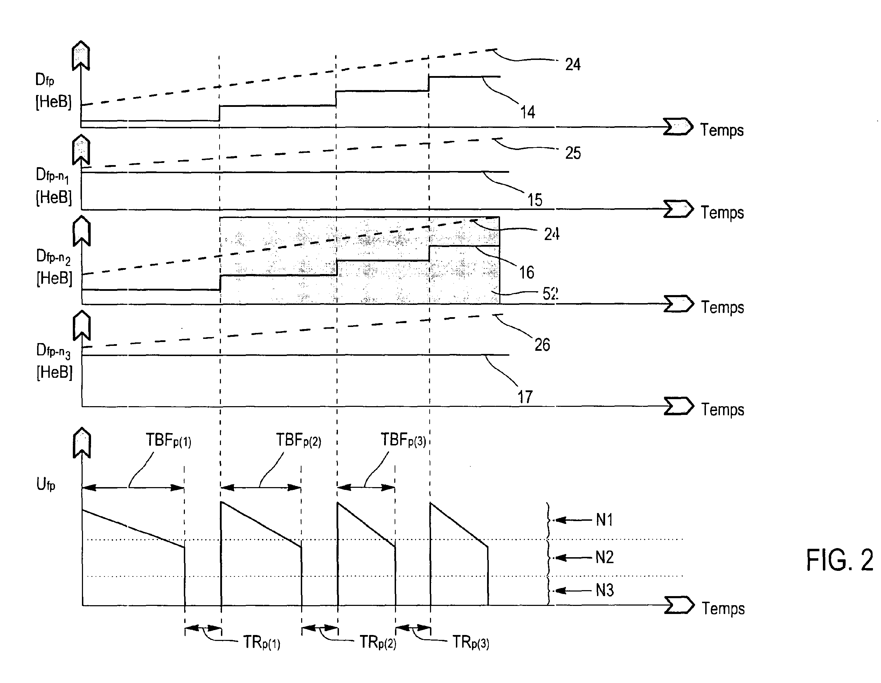

Les figures 2 à 6 illustrent, pour différents exemples :

- l'état d'usure Ufp des plaquettes en fonction du temps, l'intervalle des valeurs de Ufp correspondant au niveau 1 d'état d'usure des plaquettes étant référencé N1, l'intervalle des valeurs de Ufp correspondant au niveau 2 d'état d'usure des plaquettes étant référencé N2, l'intervalle des valeurs de Ufp correspondant au niveau 3 d'état d'usure des plaquettes étant référencé N3,
- le temps de bon fonctionnement TBFp(1) des plaquettes avant une première panne des plaquettes, le temps de réparation TRp(1) de cette première panne, le temps de bon fonctionnement TBFp(2) des plaquettes avant une deuxième panne des plaquettes, le temps de réparation TRp(2) de cette deuxième panne, le temps de bon fonctionnement TBFp(3) des plaquettes avant une troisième panne des plaquettes, et le temps de réparation TRp(3) de cette troisième panne, chacune de ces pannes correspondant à une immobilisation du véhicule 3 lors d'un remplacement des plaquettes de frein,
- l'indicateur de disponibilité fonctionnelle Dfp des plaquettes de frein du véhicule 3 en fonction du temps, indépendant des niveaux d'état d'usure des plaquettes c'est-à-dire non spécifique à l'un quelconque des niveaux d'états des plaquettes, calculé par l'unité 8 selon la formule 6, et référencé 14,
- un indicateur de disponibilité standard des plaquettes de frein du véhicule 3, référencé 24,
- l'indicateur de disponibilité des plaquettes de frein spécifique au niveau 1 d'état d'usure des plaquettes en fonction du temps, calculé par l'unité 8 selon la formule 9, noté $Df_p\text{-}n_1$ et référencé 15,
- un indicateur de disponibilité standard des plaquettes de frein spécifique au niveau 1 d'état d'usure des plaquettes en fonction du temps, référencé 25,
- l'indicateur de disponibilité des plaquettes de frein spécifique au niveau 2 d'état d'usure des plaquettes en fonction du temps, calculé par l'unité 8 selon la formule 9, noté $Df_p\text{-}n_2$ et référencé 16 ; cet indicateur 16 est plus pertinent et réaliste que ceux proposés par l'état de la technique antérieure, car il correspond à une utilisation du système 3 telle que recommandée par le constructeur ou fournisseur, et évite donc des artefacts sur la valeur de l'indicateur qui pourraient être dus à une mauvaise utilisation du système ;
- l'indicateur de disponibilité des plaquettes de frein spécifique au niveau 3 d'état d'usure des plaquettes en fonction du temps, calculé par l'unité 8 selon la formule 9, noté $Df_p\text{-}n_3$ et référencé 17 ; et
- un indicateur de disponibilité standard des plaquettes de frein spécifique au niveau 3 d'état d'usure des plaquettes en fonction du temps, référencé 26.

Les indicateurs de disponibilité standard 24, 25 et 26 sont de même unité que les indicateurs de disponibilités calculés par l'unité 8, et sont basés sur des recommandations et des valeurs techniques du constructeur ou fournisseur du système 3, et correspondent donc chacun à un indicateur de disponibilité indiqué ou garanti par le constructeur ou fournisseur. Chacun des indicateurs de disponibilité 24, 25, 26 a une valeur qui est une fonction du temps, car cette valeur est une fonction de l'âge du système 3. Pour l'indicateur de disponibilité standard 24, cette garantie est conditionnée par une bonne utilisation et un entretien correct du système selon les recommandations du constructeur ou fournisseur : l'indicateur de disponibilité standard 24 est donc un indicateur de disponibilité standard des plaquettes de frein spécifique au niveau 2 d'état d'usure des plaquettes, puisque le constructeur ou fournisseur recommande de changer les plaquettes lorsque ces dernières sont au niveau 2 d'état d'usure.

Ces indicateurs de disponibilité standard 24, 25, 26 sont vérifiés, et validés ou modifiés par un centre indépendant de validation, qui peut confronter les recommandations et les valeurs techniques du constructeur ou du fournisseur avec des mesures réelles d'un indicateur de disponibilité respectivement 16, 15, 17. On remarque que la valeur de l'indicateur de disponibilité standard 24, 25 ou 26 est croissante dans le temps, le constructeur ou fournisseur fournissant cet indicateur standard 24, 25, ou 26 considérant que plus le système 3 vieilli, plus il va user rapidement l'élément « plaquettes de frein ».

L'unité 8 est en outre agencée pour mettre en oeuvre une analyse et/ou une comparaison des différents indicateurs de disponibilités standard 24, 25, 26 et calculés Dfp, $Df_p\text{-}n_1$ , $Df_p\text{-}n_2$ , $Df_p\text{-}n_3$, et en déduire une recommandation. L'afficheur 12 est agencé pour faire un affichage de cette recommandation. Ainsi, le dispositif 1 n'intervient pas directement dans le fonctionnement du système technique 3 mais calcule des indicateurs de disponibilités et indique les informations et mesures à prendre par son utilisateur dans toutes les phases de son utilisation. Le dispositif 1 est un dispositif d'aide à la décision.

En particulier :

- l'unité 8 compare l'indicateur 14 de disponibilité non spécifique et l'indicateur 24 de disponibilité standard : si l'indicateur 14 de disponibilité non spécifique est supérieur à l'indicateur 24 de disponibilité standard, c'est qu'il y a par exemple soit un problème de disponibilité de l'élément « plaquettes », soit un problème d'utilisation du système par l'utilisateur 18 : dans ce cas, à partir de cette comparaison, l'unité 8 détermine l'existence du problème et en déduit une recommandation d'utilisation du système,

- l'unité 8 compare l'indicateur 14 de disponibilité non spécifique et l'indicateur 16 de disponibilité spécifique : si l'indicateur 14 de disponibilité non spécifique est supérieur et diffère de l'indicateur 16 de disponibilité spécifique au-delà d'un certain seul, l'unité 8 en déduit que l'utilisateur n'utilise pas le système de la façon recommandée par le constructeur ou fournisseur, et en déduit une recommandation d'utilisation du système.

- en outre, de préférence après chaque réparation de panne pour laquelle l'élément « plaquettes de frein » est tombé en panne à un niveau d'état donné respectivement N1, N2, ou N3, l'unité 8 compare l'indicateur respectivement 15, 16, ou 17 de disponibilité calculé spécifique à ce niveau d'état avec l'indicateur respectivement 25, 24, ou 26 de disponibilité standard spécifique à ce niveau d'état :

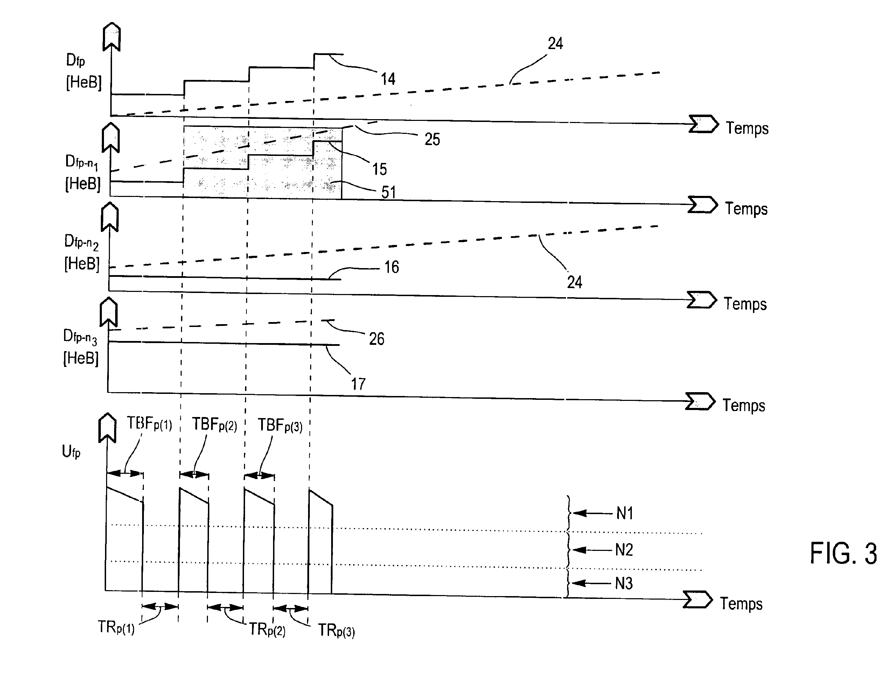

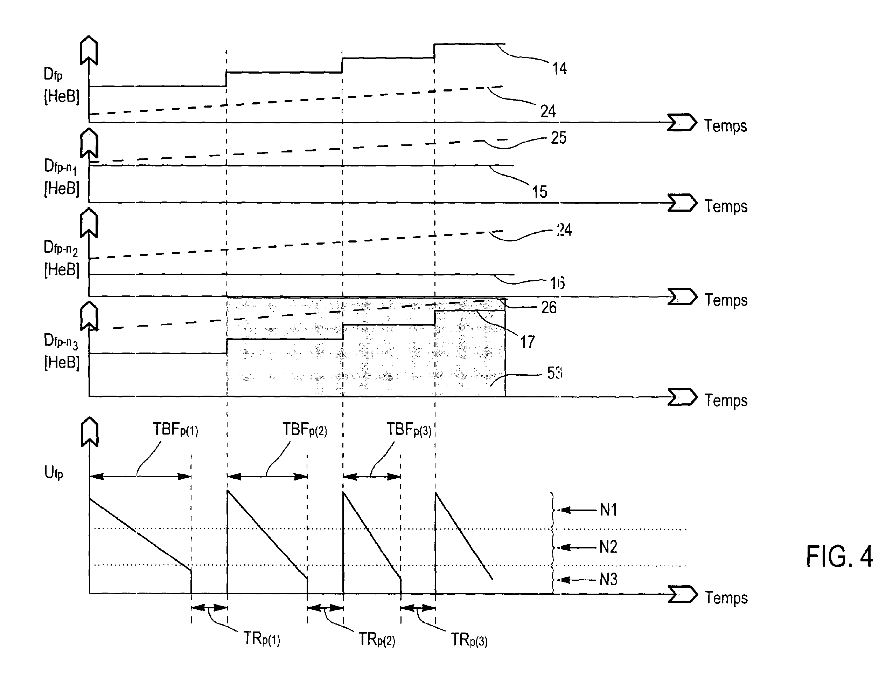

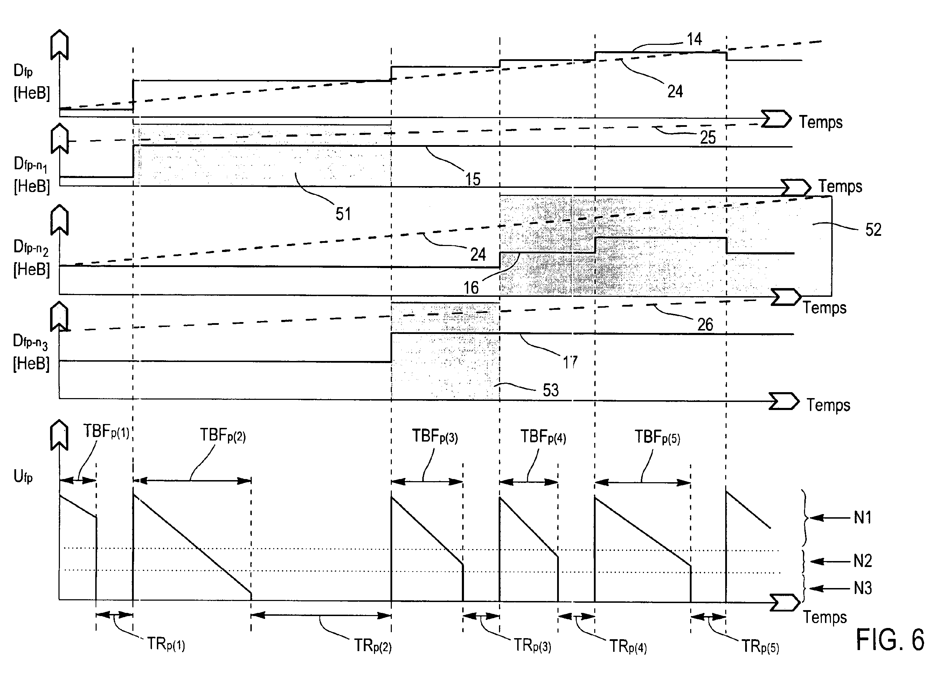

  ○ l'unité 8 compare l'indicateur 15 de disponibilité spécifique au niveau 1 avec l'indicateur de disponibilité standard 25, de préférence après chaque réparation de panne pour laquelle l'élément « plaquettes de frein » est tombé en panne au niveau 1 (voir zone 51 de prévision de disponibilité pour cet élément, représentée sur les figures 3 et 6); l'unité 8 obtient alors un résultat de la comparaison entre l'indicateur 15 et l'indicateur 25, le résultat comprenant le fait que la disponibilité spécifique 15 est plus grande ou moins grande que la disponibilité standard 25, et les moyens 12, 13 communiquent à l'utilisateur 18 du système 3 un message opérationnel qui dépend de ce résultat, par exemple respectivement « la disponibilité de vos plaquettes de frein est en accord avec la disponibilité standard garantie par le constructeur ou fournisseur » ou « problème de plaquettes de frein : la disponibilité de vos plaquettes est moins bonne que la disponibilité standard garantie par le constructeur ou fournisseur»,
  ○ l'unité 8 compare l'indicateur 16 de disponibilité spécifique au niveau 2 recommandé avec l'indicateur de disponibilité standard 24, de préférence après chaque réparation de panne pour laquelle l'élément « plaquettes de frein » est tombé en panne au niveau 2 (voir zone 52 de prévision de disponibilité pour cet élément, représentée sur les figures 2, 5 et 6); l'unité 8 obtient alors un résultat de la comparaison entre l'indicateur 16 de disponibilité spécifique à ce niveau 2 et l'indicateur 24 de disponibilité standard, le résultat comprenant le fait que la disponibilité spécifique 16 à ce niveau d'état est plus grande ou moins grande que la disponibilité standard 24, et les moyens 12, 13 communiquent à l'utilisateur 18 du système 3 un message opérationnel qui dépend de ce résultat, par exemple respectivement « la disponibilité de vos plaquettes de frein est en accord avec la disponibilité standard garantie par le constructeur ou fournisseur » ou « problème de plaquettes de frein : la disponibilité de vos plaquettes est moins bonne que la disponibilité standard garantie par le constructeur ou fournisseur»,
  ○ l'unité 8 compare l'indicateur 17 de disponibilité spécifique au niveau 3 avec l'indicateur de disponibilité standard 26, de préférence après chaque réparation de panne pour laquelle l'élément « plaquettes de frein » est tombé en panne au niveau 3 (voir zone 53 de prévision de disponibilité pour cet élément, représentée sur les figures 4 et 6); l'unité 8 obtient alors un résultat de la comparaison entre l'indicateur 17 et l'indicateur 26, le résultat comprenant le fait que la disponibilité spécifique 17 est plus grande ou moins grande que la disponibilité standard 26, et les moyens 12, 13 communiquent à l'utilisateur 18 du système 3 un message opérationnel qui dépend de ce résultat, par exemple respectivement « la disponibilité de vos plaquettes de frein est en accord avec la disponibilité standard garantie par le constructeur ou fournisseur » ou « problème de plaquettes de frein : la disponibilité de vos plaquettes est moins bonne que la disponibilité standard garantie par le constructeur ou fournisseur».

Les moyens de communication 11 sont agencés pour communiquer avec deux types de Centre Supervisant la Disponibilité, noté CSD et référencés 20:

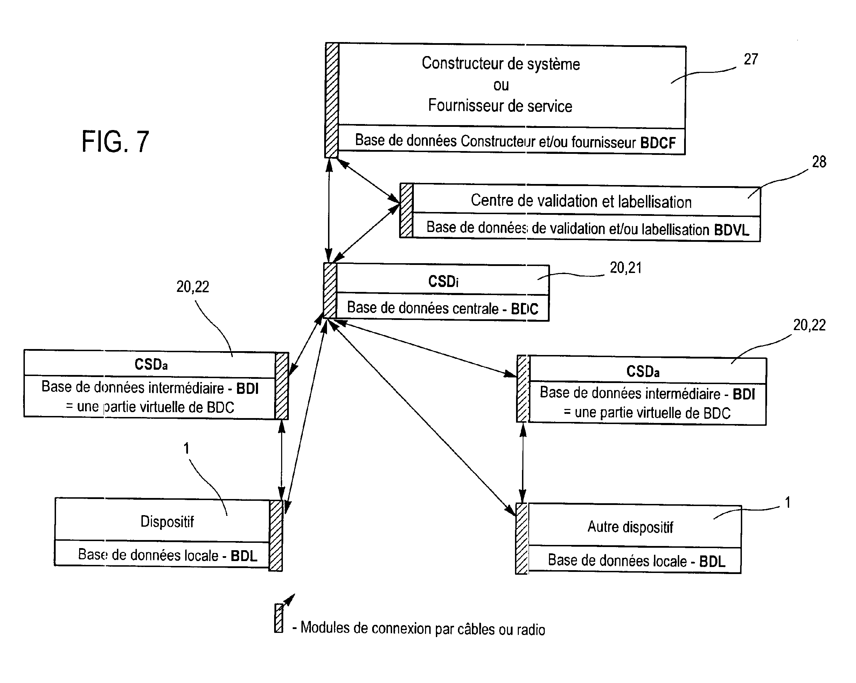

- au moins un centre automatique, noté CSDa et référencé 22 sur le figure 7, et
- au moins un centre interactif, noté CSDi et référencé 21 sur le figure 7.

Chaque CSDi comprend une base de données centrale BDC. Chaque CSDa comprend une base de données intermédiaire BDI, qui est une partie virtuelle de la base de données centrale BDC. Ces centres CSDa et CSDi collectent en temps réel les indicateurs de disponibilités calculés par le dispositif 1 et les enregistrent dans leur base de données respectivement BDI et BDC, et sont eux aussi sont agencés pour mettre en oeuvre une analyse et/ou une comparaison des différents indicateurs de disponibilités calculés Dfp, $Df_p\text{-}n_1$, $Df_p\text{-}n_2$, $Df_p\text{-}n_3$ ou standard 24, 25, 26 et en déduire une recommandation pour l'utilisateur 18.

Dans un cas de danger, de dépassement d'un niveau d'état d'un des éléments du système 3 par rapport à un seuil ou de dépassement d'un indicateur de disponibilité calculé par le dispositif 1 par rapport à un seuil, le dispositif 1 entre dans une phase de communication permanente et coopérera avec le CSDa le plus proche pour trouver une solution optimale. Dans certains cas le CSDa passe la coordination à un CSDi qui lui est doté de moyens d'interaction avec des assistants humains et est doté d'un niveau d'analyse renforcée, afin de communiquer et de discuter d'une solution proposée avec l'utilisateur 18 du système.

Dans l'exemple de la figure 2, l'unité 8 déduit que les indicateurs calculés 14, 16 sont inférieurs à l'indicateur standard 24. La disponibilité réelle du système 3 est meilleure que celle garantie par le constructeur du système. L'afficheur 12 affiche : « la disponibilité de vos plaquettes de frein est en accord avec la disponibilité standard garantie par le constructeur ou fournisseur ».

En comparant les indicateurs 14 et 16, l'unité 8 déduit donc que l'indicateur 14 est égal à l'indicateur 16, et que l'utilisateur répare toujours ses plaquettes lorsque celles-ci sont dans le niveau 2 d'état d'usure. En examinant ia courbe d'Ufp en fonction du temps, on remarque en effet que l'utilisateur change ses plaquettes de frein toujours lorsque l'état d'usure des plaquettes est au niveau 2 d'usure (seul l'indicateur spécifique au niveau 2 $Df_p\text{-}n_2$ est donc mis à jour), ce qui correspond au niveau d'usure recommandé par le constructeur pour le remplacement des plaquettes.

Dans l'exemple de la figure 3, l'unité 8 remarque que l'indicateur calculé 14 est supérieur à l'indicateur standard 24. A priori, cela pourrait signifier que la disponibilité des plaquettes de frein est moins bonne que celle garantie par le constructeur. Cependant, en examinant la courbe d'Ufp en fonction du temps, on remarque que l'utilisateur change ses plaquettes de frein toujours lorsque l'état d'usure des plaquette est au niveau 1 d'usure (seul l'indicateur $Df_p\text{-}n_1$ spécifique au niveau 1 est donc mis à jour), ce qui est trop tôt par rapport au niveau 2 d'usure recommandé par le constructeur pour le remplacement des plaquettes. En effet, en remplaçant les plaquettes au niveau d'usure n°1, cela induit des temps de bon fonctionnement TBFp(1), TBFp(2) et TBFp(3) très courts et augmente l'indicateur de disponibilité calculé 14.

L'unité 8 compare les indicateurs 14, 16, détermine que l'indicateur 14 est toujours supérieur à l'indicateur 16 au-delà d'un seuil de tolérance, et en déduit la recommandation anticipative suivante qui est affichée sur l'afficheur 12 : « vous changer vos plaquettes de frein trop tôt ».

Pour pouvoir établir si la disponibilité réelle des plaquettes de frein est moins bonne que celle garantie par le constructeur, l'unité 8 compare l'indicateur spécifique au niveau 1 $Df_p\text{-}n_1$ (référencé 15) avec l'indicateur standard 25 après chaque réparation de panne pour laquelle les plaquettes sont tombées en panne au niveau 1. L'indicateur $Df_p\text{-}n_1$ étant inférieur à l'indicateur 25, la disponibilité réelle des plaquettes de frein est a priori meilleure que celle garantie par le constructeur. L'afficheur 12 affiche : « la disponibilité de vos plaquettes de frein est en accord avec la disponibilité standard garantie par le constructeur ou fournisseur »

Dans l'exemple de la figure 4, on remarque que l'indicateur calculé 14 est supérieur à l'indicateur standard 24. A priori, cela pourrait signifier que la disponibilité des plaquettes de frein est moins bonne que celle garantie par le constructeur. Cependant, en examinant la courbe d'Ufp en fonction du temps, on remarque que l'utilisateur change ses plaquettes de frein toujours lorsque l'état d'usure des plaquettes est au niveau 3 d'usure (seul l'indicateur $Df_p\text{-}n_3$ spécifique au niveau 3 est donc mis à jour), ce qui est trop tard par rapport au niveau 2 d'usure recommandé par le constructeur pour le remplacement des plaquettes. En effet, en remplaçant les plaquettes au niveau d'usure n°3, les disques de freinage sont eux aussi endommagés ce qui induit des temps de réparation TRp(1), TRp(2) et TRp(3) très longs et augmente l'indicateur de disponibilité calculé 14.

L'unité 8 compare les indicateurs 14, et 16, détermine que l'indicateur 14 est toujours supérieur à l'indicateur 16 au-delà d'un seuil de tolérance, et en déduit la recommandation anticipative suivante qui est affichée sur l'afficheur 12 : « vous changer vos plaquettes de frein trop tardivement ».

Pour pouvoir établir si la disponibilité réelle des plaquettes de frein est moins bonne que ceiie garantie par ie constructeur, l'unité 8 compare l'indicateur spécifique au niveau 3 $Df_p\text{-}n_3$ (référencé 17) avec l'indicateur standard 26 après chaque réparation de panne pour laquelle les plaquettes sont tombées en panne au niveau 3. L'indicateur $Df_p\text{-}n_3$ étant inférieur à l'indicateur 26, la disponibilité réelle des plaquettes de frein est a priori meilleure que celle garantie par le constructeur. L'afficheur 12 affiche : « la disponibilité de vos plaquettes de frein est en accord avec la disponibilité standard garantie par le constructeur ou fournisseur »

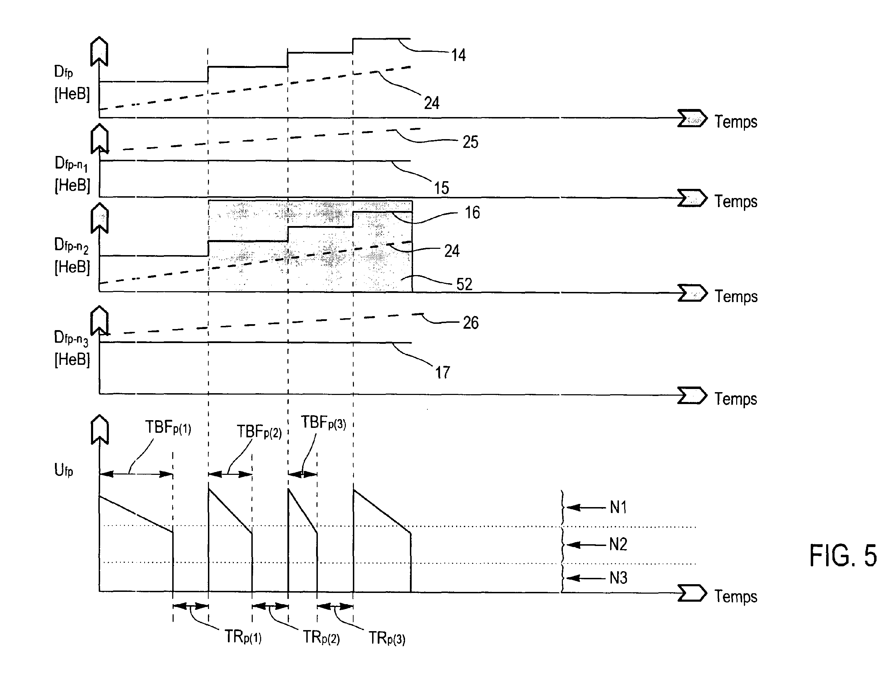

Dans l'exemple de la figure 5, on remarque que l'indicateur calculé 14 est supérieur à l'indicateur standard 24. A priori, cela pourrait signifier que la disponibilité des plaquettes de frein est moins bonne que celle garantie par le constructeur.

Pour déterminer s'il y a un problème d'utilisation du système 3, l'unité 8 compare l'indicateur 14 avec l'indicateur 16. Ces indicateurs 14, 16 étant égaux, l'unité 8 en déduit que l'utilisateur change toujours ses plaquettes dans le niveau 2 recommandé, et qu'il n'y a pas de problème d'utilisation du système 3 concernant le remplacement des plaquettes.

Pour pouvoir établir si la disponibilité réelle des plaquettes de frein est moins bonne que celle garantie par le constructeur, l'unité 8 compare l'indicateur spécifique au niveau 2 $Df_p$-$n_2$ (référencé 16) avec l'indicateur standard 24 après chaque réparation de panne pour laquelle les plaquettes sont tombées en panne au niveau 2.

L'indicateur $Df_p$-$n_2$ étant supérieur à l'indicateur 24, la disponibilité réelle des plaquettes de frein est donc a priori moins bonne que celle garantie par le constructeur. Ce problème peut être du soit à une mauvaise qualité des plaquettes de frein qui se dégradent trop rapidement, soit à un problème du véhicule qui abime trop rapidement les plaquettes.

L'afficheur 12 affiche alors un message du type : « problème de plaquettes de frein : la disponibilité de vos plaquettes est moins bonne que la disponibilité standard garantie par le constructeur ou fournisseur».

L'exemple de la figure 6 illustre en outre le temps de bon fonctionnement TBFp(4) des plaquettes avant une quatrième panne des plaquettes, le temps de réparation TRp(4) de cette quatrième panne, le temps de bon fonctionnement TBFp(5) des plaquettes avant une cinquième panne des plaquettes, le temps de réparation TRp(5) de cette cinquième panne, chacune de ces pannes correspondant à une immobilisation du véhicule 3 lors d'un remplacement des plaquettes de frein.

Dans l'exemple de la figure 6, on remarque que l'indicateur calculé 14 est parfois supérieur et parfois inférieur à l'indicateur standard 24.

Pour pouvoir établir si la disponibilité réelle des plaquettes de frein est moins bonne que celle garantie par le constructeur, après chaque réparation de panne pour laquelle l'élément « plaquettes de frein » est tombé en panne à un niveau d'état donné respectivement N1, N2, ou N3 (tel qu'illustré par les zones grisées de la figure 6), l'unité 8 compare l'indicateur respectivement 15, 16, ou 17 de disponibilité calculé spécifique à ce niveau d'état avec l'indicateur respectivement 25, 24, ou 26 de disponibilité standard spécifique à ce niveau d'état :

- après chaque réparation de panne pour laquelle les plaquettes sont tombées en panne au niveau 1, l'unité 8 compare l'indicateur spécifique au niveau 1 $Df_p$-$n_1$ (référencé 15) avec l'indicateur standard 25, et déduit qu'après chaque réparation de panne pour laquelle les plaquettes sont tombées en panne au niveau 1, l'indicateur $Df_p$-$n_1$ est inférieur à l'indicateur 25,
- après chaque réparation de panne pour laquelle les plaquettes sont tombées en panne au niveau 2, l'unité 8 compare l'indicateur spécifique au niveau 2 $Df_p$-$n_2$ (référencé 16) avec l'indicateur standard 24, et déduit qu'après chaque réparation de panne pour laquelle les plaquettes sont tombées en panne au niveau 2, l'indicateur $Df_p$-$n_2$ est inférieur à l'indicateur 24, et
- après chaque réparation de panne pour laquelle les plaquettes sont tombées en panne au niveau 3, l'unité 8 compare l'indicateur spécifique au niveau 3 $Df_p$-$n_3$ (référencé 17) avec l'indicateur standard 26, et déduit qu'après chaque réparation de panne pour laquelle les plaquettes sont tombées en panne au niveau 3, l'indicateur $Df_p$-$n_3$ est inférieur à l'indicateur 26.

Après chaque réparation de panne, l'unité 8 en déduit donc que la disponibilité réelle des plaquettes de frein est meilleure que celle garantie par le constructeur, et l'afficheur 12 affiche : « la disponibilité de vos plaquettes de frein est en accord avec la disponibilité standard garantie par le constructeur ou fournisseur »

En analysant et comparant les évolutions temporelles des indicateurs Dfp, $Df_p$-$n_1$, $Df_p$-$n_2$, $Df_p$-$n_3$ et des indicateurs standard 24, 25 et 26 en fonction du temps, l'unité 8 remarque que l'indicateur calculé 14 ne devient momentanément supérieur à l'indicateur standard 24 que du fait d'une réparation trop prématurée (niveau d'usure 1, temps de bon fonctionnement TBFp(1) trop court) ou trop tardive (niveau d'usure 3, temps de réparation TRp(2) très long).

Ainsi, à la vue des exemples des figures 2 à 6, on remarque qu'en comparant l'indicateur spécifique respec-tivement $Df_p$-$n_1$ (référencé 15), $Df_p$-$n_2$ (référencé 16), ou $Df_p$-$n_3$ (référencé 17) avec l'indicateur standard respectivement 25, 24, ou 26 on rend mieux compte de la qualité réelle du système 3 par rapport à celle garantie par le constructeur. Des artefacts dus à une mauvaise utilisation du système sont éiiminés, ce qui ne serait pas le cas si, pour chercher à déterminer si la disponibilité réelle des plaquettes de frein est moins bonne que celle garantie par le constructeur, on se contentait de comparer les indicateurs 14 et 24.

Mise à jour de l'indicateur de disponibilité standard 24, 25 et/ou 26

Pour pouvoir effectuer les différentes comparaisons précédemment décrites, les indicateurs de disponibilité standard 24, 25 et 26 sont enregistrés localement dans la base de donné locale 6 du dispositif 1. Plus précisément, l'évolution temporelle théorique de chacun des indicateurs standard 24, 25 et 26 est enregistrée dans la BDL 6. En effet, chacun des indicateurs de disponibilité 24, 25, 26, 15, 16, 17 a une valeur qui est une fonction du temps, car cette valeur est une fonction de l'âge du système 3.

En référence à la figure 7, chaque indicateur de disponibilité standard 24, 25, 26 (c'est-à-dire son évolution temporelle théorique) est régulièrement mis à jour dans la base de données locale 6 selon les étapes successives a) à g) suivantes :

a) le constructeur ou fournisseur 27 propose, fabrique et vend plusieurs systèmes 3 du même type que celui décrit précédemment (par exemple un parc automobile d'un modèle donné), chacun des systèmes 3 étant associé avec un dispositif 1 tel que décrit précédemment ; le constructeur ou fournisseur enregistre dans sa Base de Données Constructeur ou Fournisseur BDCF et dans la Base de Données Centrale (BDC) de chaque CSDi et dans la Base de Données Intermédiaire (BDI) de chaque CSDa les valeurs standards en fonction du temps (aussi appelées « trajectoires » standards) suivantes :

- les valeurs en fonction du temps des indicateurs de disponibilité standard d'au moins un des éléments d'un des systèmes 3, par exemple des indicateurs 24, 25, 26,
- les valeurs standards en fonction du temps de MTBF et de MTTR de l'au moins un des éléments du système,
- les valeurs standards en fonction du temps de chacun des $MTBFn_j$ de l'au moins un des éléments du système, par exemple de $MTBFn_1$, $MTBFn_2$, et $MTBFn_3$
- les valeurs standards en fonction du temps de chacun des $MTTRn_j$ de l'au moins un des éléments du système, par exemple de $MTTRn_1$, $MTTRn_2$, et $MTTRn_3$
- la valeur standard en fonction du temps de l'indicateur de disponibilité fonctionnelle Df du système,
- la valeur standard en fonction du temps de l'indicateur de disponibilité de composants Dc du système,
- la valeur standard en fonction du temps de l'indicateur de disponibilité générale Dg du système,

b) le constructeur ou fournisseur fourni au moins une de, de préférence toutes, ces valeurs standards à un organisme de validation et de labellisation 28, qui enregistre ces valeurs dans sa Base de données de validation et de labellisation BDVL.

c) L'organisme de labellisation et de validation valide et/ou modifie ces valeurs standards qui lui sont fournies en réalisant des tests de systèmes ou en s'appuyant sur des statistiques. L'organisme en informe le constructeur ou fournisseur. Les valeurs standards modifiées par l'organisme de labellisation et de validation sont enregistrées et modifiées dans la base de données centrale BDC de chaque CSDi et dans la base de données intermédiaire BDI de chaque CSDa selon des procédures adéquates en coordination entre le constructeur ou fournisseur et l'organisme de labellisation et de validation.

d) Le constructeur ou fournisseur envoi, de préférence via un CSDi ou CSDa, les valeurs standards validées ou modifiées aux registres d'identification ainsi qu'aux bases de données locales 6 de chacun des dispositifs 1 qui enregistrent ces valeurs standards. Le constructeur ou fournisseur définit ainsi les niveaux de qualité de service ou de produit au niveau de la disponibilité d'un des systèmes 3, c'est-à-dire des valeurs contractuelles de niveaux de qualité de service ou de produit au niveau de la disponibilité d'un des systèmes 3.

e) Pour chacun des dispositifs 1, les valeurs réelles en fonction du temps, mesurées ou calculée par le dispositif 1, de MTBF, MTTR, des $MTBFn_j$ et des $MTTRn_j$ de l'au moins un élément, de l'indicateur de disponibilité non spécifique D (par exemple Dfp) de l'au moins un élément, de l'indicateur de disponibilité spécifique pour chaque niveau d'état de l'au moins un élément (par exemple $Df_p$-$n_1$, $Df_p$-$n_2$ et $Df_p$-$n_3$), de Dc, de Df et de Dg calculées par l'unité 8 du dispositif 1 de ce système comme décrit précédemment sont :

- enregistrées dans la base de données locale 6 du dispositif 1 de ce système et,
- envoyées de façon régulière (typiquement après un ou plusieurs calcul(s) d'indicateur(s) de disponibilité) par les moyens de communication 11 à la base de données intermédiaire BDI d'au moins un CSDa et/ou à la base de données centrale BDC d'au moins un CSDi et/ou au constructeur ou fournisseur et/ou à l'organisme de labellisation et de validation pour modification ou validation,
- comparées avec leur valeur standard, comme cela a été décrit précédemment pour l'indicateur de disponibilité Dfp référencé 14 et sa valeur standard référencée 24, et pour l'indicateur respectivement 15, 16, ou 17 et sa valeur standard respectivement 25, 24, ou 26 ; si l'une des valeurs réelles mesurées dépasse sa valeur standard, cela est signalé à l'utilisateur du système 3 et envoyé à la base de données centrale, au constructeur ou fournisseur et au centre de labellisation. Les valeurs standards déclarées par les constructeurs ou fournisseurs peuvent être couvertes par des garanties ou des accords de qualité du service ou du système. En particulier des pénalités peuvent être définies pour le dépassement des valeurs réelles calculées par rapport aux valeurs standards.

f) Les valeurs standards enregistrées dans chaque base de données centrale, dans chaque base de données intermédiaire, dans la base de données Constructeur ou Fournisseur, dans la base de données de validation et de labellisation sont modifiées et mises à jour selon des procédures adéquates mises en oeuvre par le constructeur ou fournisseur et/ou l'organisme de labellisation et de validation, et qui prennent en compte les valeurs réelles envoyées régulièrement par chaque dispositif 1. Notamment, on met à jour régulièrement la valeur en fonction du temps de chaque indicateur 25, 24, ou 26 standard spécifique à un niveau d'état donné en moyennant la valeur de cet indicateur standard enregistrée dans une base de données centrale avec ia valeur en fonction du temps de l'indicateur 15, 16, 17 spécifique à ce même niveau d'état et calculées et envoyées régulièrement par chacun des dispositifs 1. Ainsi, les informations venants des systèmes observés sont réceptionnées et prises en comptes dans les trajectoires corrigées et dans les niveaux des engagements de qualité en disponibilité. Par exemple, la valeur de l'indicateur de disponibilité standard 24 de l'élément « plaquettes de frein » est modifiée et mise à jour selon une procédure qui prend en compte la valeur de l'indicateur de disponibilité $Df_p$-$n_2$ spécifique au niveau d'usure n˚2 recommandé par le constructeur ou fournisseur et calculé pour l'ensemble des systèmes, mais qui ne prend pas en compte la valeur d'un indicateur de disponibilité $Df_p$-$n_1$ ou $Df_p$-$n_3$ pour le niveau d'usure n˚1 ou n˚3 qui n'est par recommandé par le constructeur ou fournisseur, ce qui permet de mettre à jour l'indicateur de disponibilité standard 24 qu'en fonction d'utilisations correctes du système 3 qui correspondent aux recommandations du constructeur ou fournisseur. De même, la valeur de l'indicateur de disponibilité standard 25 de l'élément « plaquettes de frein » est modifiée et mise à jour selon une procédure soit qui prend en compte la valeur de l'indicateur de disponibilité $Df_p$-$n_1$ spécifique au niveau d'usure n˚1 et calculé pour l'ensemble des systèmes, mais qui ne prend pas en compte la valeur d'un indicateur de disponibilité $Df_p$-$n_2$ ou $Df_p$-$n_3$ pour le niveau d'usure n˚2 ou n˚3. De même, la valeur de l'indicateur de disponibilité standard 26 de l'élément « plaquettes de frein » est modifiée et mise à jour selon une procédure soit qui prend en compte la valeur de l'indicateur de disponibilité $Df_p$-$n_3$ spécifique au niveau d'usure n˚3 et calculé pour l'ensemble des systèmes, mais qui ne prend pas en compte la valeur d'un indicateur de disponibilité $Df_p$-$n_1$ ou $Df_p$-$n_2$ pour le niveau d'usure n˚1 ou n˚2.

g) Les valeurs standards mises à jour à l'étape f) précédente sont envoyées au dispositif 1 de chacun des systèmes 3 via les moyens de communication 11 pour mettre à jour ces valeurs dans la base de donnée locale 6 de chacun de ces dispositifs 1, puis on réitère les étapes e) f) et g).

Ainsi, l'unité de calcul 8 et les moyens de communication 11 de chacun des dispositifs 1 permettent de mettre à jour l'indicateur de disponibilité standard 24, 25, ou 26 dans la base de données locale 6 de chacun de ces dispositifs 1. Pour cela, chacun des dispositifs est connecté via les moyens de communication 11 à la base de données centrale via une base de données intermédiaire BDI et à des moyens de calcul agencés pour mettre en oeuvre les procédures adéquates de mise à jour susmentionnées.

Bien sûr, l'invention n'est pas limitée aux exemples qui viennent d'être décrits et de nombreux aménagements peuvent être apportés à ces exemples sans sortir du cadre de l'invention.

En particulier, toute la description qui vient d'être faite resterait valable dans le cas d'un service technique au lieu d'un système, comme par exemple une fourniture d'un accès internet ou un service de relevé automatique à distance d'un compteur d'électricité, en remplaçant notamment le terme « système » par le terme « service » dans la description précédente. Un exemple d'élément d'une fourniture d'un accès internet est par exemple un débit d'accès à internet qui peut avoir plusieurs niveaux d'états possibles (rapide, moyen, lent) et qui peut être réparé en réinitialisant la connexion Internet.

En outre, l'invention peut bien entendu être mise en oeuvre pour tout élément comprenant plusieurs niveaux d'état possibles. Le nombre de niveaux d'état n'est pas limité à trois, peut être égal à n'importe quel nombre entier : 2, 5, 9, 13, 22, 2000, etc...

**Revendications**

1. Procédé de mesure d'une disponibilité pour un système (3) ou un service technique, comprenant :

   - une mesure d'un état d'un élément du système ou service technique, l'état mesuré étant à un niveau d'état parmi plusieurs niveaux d'état distincts (N1, N2, N3),

   **caractérisé en ce qu'**il comprend en outre :

   - pour au moins un des niveaux d'état (N1 ; N2 ; N3), un calcul d'un indicateur (15 ; 16 ; 17) de disponibilité de l'élément spécifique à ce niveau d'état, l'indicateur de disponibilité spécifique à ce niveau d'état étant calculé pour des pannes pour lesquelles l'élément tombe en panne à ce niveau d'état (N1 ; N2 ; N3).

2. Procédé de mesure selon la revendication 1, **caractérisé en ce qu'**il comprend, pour chaque niveau d'état parmi les plusieurs niveaux d'état distincts, un calcul d'un indicateur de disponibilité de l'élément spécifique à ce niveau d'état, l'indicateur de disponibilité spécifique à ce niveau d'état étant calculé pour des pannes pour lesquelles l'élément tombe en panne en étant à ce niveau d'état.

3. Procédé de mesure selon la revendication 1 ou 2, **caractérisé en ce que** l'indicateur (15 ; 16 ; 17) de disponibilité spécifique à un niveau d'état (N1 ; N2 ; N3) est calculé en fonction :

   - d'un temps moyen entre deux pannes successives de cet élément lorsque cet élément tombe en panne à ce niveau d'état (N1 ; N2 ; N3), et
   - d'un temps moyen de réparation d'une panne de cet élément pour laquelle cet élément est tombé en panne à ce niveau d'état (N1 ; N2 ; N3).

4. Procédé de mesure selon la revendication 3, **caractérisé en ce que** l'indicateur (15 ; 16 ; 17) de disponibilité spécifique à un niveau d'état (N1 ; N2 ; N3) est calculé en fonction du rapport entre d'une part le temps moyen entre deux pannes et d'autre part la somme du temps moyen entre deux pannes et du temps moyen de réparation.

5. Procédé de mesure selon l'une quelconque des revendications 1 à 4, **caractérisé en ce qu'**il comprend en outre, pour au moins un des niveaux d'état, une comparaison entre l'indicateur de disponibilité calculé spécifique à ce niveau d'état (15, 16, 17) et un indicateur (25, 24, 26) de disponibilité standard.

6. Procédé de mesure selon la revendication 5, **caractérisé en ce qu'**il comprend, pour chaque niveau d'état, une comparaison entre l'indicateur de disponibilité calculé spécifique à ce niveau d'état et un indicateur de disponibilité standard.

7. Procédé de mesure selon la revendication 5 ou 6, **caractérisé en ce qu'**après chaque réparation de panne pour laquelle l'élément est tombé en panne à un niveau d'état donné (N1 ; N2 ; N3), on compare l'indicateur (15 ; 16 ; 17) de disponibilité calculé spécifique à ce niveau d'état avec un indicateur (25 ; 24 ; 26) de disponibilité standard spécifique à ce niveau d'état.

8. Procédé de mesure selon l'une quelconque des revendications 5 à 7, **caractérisé en ce qu'**il comprend une obtention d'un résultat de la comparaison entre l'indicateur (15, 16, 17) de disponibilité calculé spécifique à ce niveau d'état et l'indicateur (25, 24, 26) de disponibilité standard, le résultat comprenant le fait que la disponibilité calculée spécifique à ce niveau d'état est plus grande ou moins grande que la disponibilité standard, et une communication à un utilisateur (18) du système ou service d'un message qui dépend de ce résultat.

9. Procédé de mesure selon l'une quelconque des revendications 5 à 8, **caractérisé en ce qu'**il comprend en outre un calcul d'un indicateur (14) de disponibilité de l'élément non spécifique à l'un quelconque des niveaux d'état.

10. Procédé de mesure selon la revendication 9, **caractérisé en ce qu'**il comprend en outre une comparaison entre l'indicateur (14) de disponibilité calculé non spécifique et un indicateur (24) de disponibilité standard.

11. Procédé de mesure selon la revendication 9 ou 10, **caractérisé en ce qu'**il comprend en outre, pour au moins un des niveaux d'état, une comparaison entre l'indicateur (14) de disponibilité calculé non spécifique et l'indicateur (16) de disponibilité calculé spécifique à ce niveau d'état.

12. Procédé de mesure selon la revendication 11, **caractérisé en ce qu'**il comprend, pour chaque niveau d'état, une comparaison entre l'indicateur de disponibilité calculé non spécifique et l'indicateur de disponibilité calculé spécifique à ce niveau d'état.

13. Procédé de mesure selon l'une quelconque des revendications 5 à 12, **caractérisé en ce qu'**il comprend en outre, pour au moins un des niveaux d'états, une mise à jour de l'indicateur (25, 24, 26) de disponibilité standard spécifique à ce niveau d'état en fonction de l'indicateur (15, 16, 17) de disponibilité spécifique à ce niveau d'état calculé pour le système (3) ou service et de préférence en outre en fonction de l'indicateur de disponibilité spécifique à ce niveau d'état calculé pour d'autres systèmes ou services du même type.

14. Procédé de mesure selon la revendication 13, **caractérisé en ce qu'**il comprend, pour chaque niveau d'état, une mise à jour de l'indicateur de disponibilité standard spécifique à ce niveau d'état en fonction de l'indicateur de disponibilité spécifique à ce niveau d'état calculé pour le système ou service et de préférence en outre en fonction de l'indicateur de disponibilité spécifique à ce niveau d'état calculé pour d'autres systèmes ou services du même type.

**15.** Procédé de mesure selon la revendication 13 ou 14, **caractérisé en ce qu'**il comprend en outre, pour au moins un des niveaux d'états :

- une réception et un enregistrement d'une valeur de l'indicateur (25 ; 24 ; 26) de disponibilité standard spécifique à ce niveau d'état, proposée par un constructeur du système ou fournisseur du service et validée par un centre de validation et de labellisation, et
- un renvoi, vers ce constructeur ou fournisseur ou centre de validation et de labellisation, d'une valeur de l'indicateur de disponibilité calculée spécifique à ce niveau d'état pour mettre à jour la valeur de l'indicateur standard.

**16.** Procédé de mesure selon la revendication 15, **caractérisé en ce qu'**il comprend, pour chaque niveau d'état :

- une réception et un enregistrement d'une valeur de l'indicateur de disponibilité standard spécifique à ce niveau d'état, proposée par un constructeur du système ou fournisseur du service et validée par un centre de validation et de labellisation, et
- un renvoi, vers ce constructeur ou fournisseur ou centre de validation et de labellisation, d'une valeur de l'indicateur de disponibilité calculée spécifique à ce niveau d'état pour mettre à jour la valeur de l'indicateur standard.

**17.** Procédé de mesure selon l'une quelconque des revendications précédentes, **caractérisé en ce qu'**il comprend en outre une déduction d'une recommandation d'utilisation du système ou service.

**18.** Dispositif de mesure d'une disponibilité pour un système (3) ou un service technique, comprenant :

- des moyens pour mesurer un état d'un élément du système ou service technique, l'état mesuré étant à un niveau d'état parmi plusieurs niveaux d'état distincts (N1, N2, N3),

**caractérisé en ce qu'**il comprend en outre :

- pour au moins un des niveaux d'état (N1 ; N2 ; N3), des moyens pour calculer un indicateur (15 ; 16 ; 17) de disponibilité de l'élément spécifique à ce niveau d'état, l'indicateur de disponibilité spécifique à ce niveau d'état étant calculé pour des pannes pour lesquelles l'élément tombe en panne à ce niveau d'état (N1 ; N2 ; N3).

**19.** Dispositif de mesure selon la revendication 18, **caractérisé en ce qu'**il comprend, pour chaque niveau d'état, des moyens pour calculer un indicateur de disponibilité de l'élément spécifique à ce niveau d'état, l'indicateur de disponibilité spécifique à ce niveau d'état étant calculé pour des pannes pour lesquelles l'élément tombe en panne à ce niveau d'état.

**20.** Dispositif de mesure selon la revendication 18 ou 19, **caractérisé en ce que** les moyens de calcul sont agencés pour calculer l'indicateur (15 ; 16 ; 17) de disponibilité spécifique à un niveau d'état (N1 ; N2 ; N3) en fonction :

- d'un temps moyen entre deux pannes successives de cet élément lorsque cet élément tombe en panne à ce niveau d'état (N1 ; N2 ; N3), et
- d'un temps moyen de réparation d'une panne de cet élément pour laquelle cet élément est tombé en panne à ce niveau d'état (N1 ; N2 ; N3).

**21.** Dispositif de mesure selon la revendication 20, **caractérisé en ce que** les moyens de calcul sont agencés pour calculer l'indicateur (15 ; 16 ; 17) de disponibilité spécifique à un niveau d'état (N1 ; N2 ; N3) en fonction du rapport entre d'une part le temps moyen entre deux pannes et d'autre part la somme du temps moyen entre deux pannes et du temps moyen de réparation.

**22.** Dispositif de mesure selon l'une quelconque des revendications 18 à 21, **caractérisé en ce qu'**il comprend en outre, pour au moins un des niveaux d'état, des moyens pour comparer l'indicateur de disponibilité calculé et spécifique à ce niveau d'état (15, 16, 17) et un indicateur (25, 24, 26) de disponibilité standard.

**23.** Dispositif de mesure selon la revendication 22, **caractérisé en ce qu'**il comprend, pour chaque niveau d'état, des moyens pour comparer l'indicateur de disponibilité calculé et spécifique à ce niveau d'état et un indicateur de disponibilité standard.

**24.** Dispositif de mesure selon la revendication 22 ou 23, **caractérisé en ce que** les moyens de comparaison sont agencés pour, après chaque réparation de panne pour laquelle l'élément est tombé en panne à un niveau d'état donné (N1 ; N2 ; N3), comparer l'indicateur (15 ; 16 ; 17) de disponibilité calculé et spécifique à ce niveau d'état avec un indicateur (25 ; 24 ; 26) de disponibilité standard spécifique à ce niveau d'état.

**25.** Dispositif de mesure selon l'une quelconque des revendications 22 à 24, **caractérisé en ce qu'**il comprend des moyens pour obtenir un résultat de comparaison entre l'indicateur (15, 16, 17) de disponibilité calculé et spécifique à ce niveau d'état et l'indicateur (25, 24, 26) de disponibilité standard, le résultat comprenant le fait que la disponibilité calculée spécifique à ce niveau d'état est plus grande ou moins grande que la disponibilité standard, et des moyens pour communiquer à un utilisateur (18) du système ou service d'un message qui dépend de ce résultat.

**26.** Dispositif de mesure selon l'une quelconque des revendications 22 à 25, **caractérisé en ce qu'**il comprend en outre des moyens pour calculer un indicateur (14) de disponibilité de l'élément non spécifique à l'un quelconque des niveaux d'état.

**27.** Dispositif de mesure selon la revendication 26, **caractérisé en ce qu'**il comprend en outre des moyens pour comparer l'indicateur (14) de disponibilité non spécifique calculé et un indicateur (24) de disponibilité standard.

**28.** Dispositif de mesure selon la revendication 26 ou 27, **caractérisé en ce qu'**il comprend en outre, pour au moins un des niveaux d'état, des moyens pour comparer l'indicateur (14) de disponibilité non spécifique calculé et l'indicateur (16) de disponibilité calculé spécifique à ce niveau d'état.

**29.** Dispositif de mesure selon la revendication 28, **caractérisé en ce qu'**il comprend, pour chaque niveau d'état, des moyens pour comparer l'indicateur de disponibilité calculé non spécifique et l'indicateur de disponibilité calculé spécifique à ce niveau d'état.

**30.** Dispositif de mesure selon l'une quelconque des revendications 22 à 29, **caractérisé en ce qu'**il comprend en outre, pour au moins un des niveaux d'états, des moyens pour mettre à jour l'indicateur (24, 25, 26) de disponibilité standard spécifique à ce niveau d'état en fonction de l'indicateur (16, 15, 17) de disponibilité spécifique à ce niveau d'état calculé pour le système (3) ou service et de préférence en outre en fonction de l'indicateur de disponibilité spécifique à ce niveau d'état calculé pour d'autres systèmes ou services du même type.

**31.** Dispositif de mesure selon la revendication 30, **caractérisé en ce qu'**il comprend, pour chaque niveau d'état, des moyens pour mettre à jour l'indicateur de disponibilité standard spécifique à ce niveau d'état en fonction de l'indicateur de disponibilité spécifique à ce niveau d'état calculé pour le système ou service et de préférence en outre en fonction de l'indicateur de disponibilité spécifique à ce niveau d'état calculé pour d'autres systèmes ou services du même type.

**32.** Dispositif de mesure selon la revendication 30 ou 31, **caractérisé en ce qu'**il comprend en outre, pour au moins un des niveaux d'états :

- des moyens pour recevoir et enregistrer une valeur de l'indicateur (25 ; 24 ; 26) de disponibilité standard spécifique à ce niveau d'état, proposée par un constructeur du système ou fournisseur du service et validée par un centre de validation et de labellisation, et
- des moyens pour renvoyer vers ce constructeur ou fournisseur ou centre de validation et de labellisation, une valeur de l'indicateur de disponibilité calculée spécifique à ce niveau d'état pour mettre à jour la valeur de l'indicateur standard.

**33.** Dispositif de mesure selon la revendication 32, **caractérisé en ce qu'**il comprend, pour chaque niveau d'état :

- des moyens pour recevoir et enregistrer une valeur de l'indicateur de disponibilité standard spécifique à ce niveau d'état, proposée par un constructeur du système ou fournisseur du service et validée par un centre de validation et de labellisation, et
- des moyens pour renvoyer vers ce constructeur ou fournisseur ou centre de validation et de labellisation, une valeur de l'indicateur de disponibilité calculée spécifique à ce niveau d'état pour mettre à jour la valeur de l'indicateur standard.

**34.** Dispositif de mesure selon l'une quelconque des revendications 18 à 33, **caractérisé en ce qu'**il comprend en outre des moyens pour déduire une recommandation d'utilisation du système ou service.

**35.** Système (3) technique, **caractérisé en ce qu'**il est solidaire d'un dispositif de mesure de disponibilité selon l'une quelconque des revendications 18 à 34.

**36.** Service technique, **caractérisé en ce qu'**il met en oeuvre un procédé de mesure de disponibilité selon l'une quelconque des revendications 1 à 17.

FIG. 1

**Légende:**

- ‖ - Unités de communication interne
- ▨ - Unités de communication externe
- ☐ - Afficheur et l'interface d'assistant interactif
- ▦ - Capteurs des données sur le système
- ▓ - Unités de communication par moyen externe

**Éléments du diagramme:**

- Unités distantes CSDa et CSDi (20)
- Système concerné (3)
- Registre d'identification (5,4)
- BDL et registres spécifiques (4,6)
- Calculs d'indicateurs de Disponibilité (8,4)
- Médiations
- Assistant d'utilisateur
- Horloge (7,4)
- Unités d'alimentation (9,10)
- (2) (11) (12) (12,13) (18) (19) (1)

EP 2 341 433 A2

FIG. 2

EP 2 341 433 A2

FIG. 3

EP 2 341 433 A2

FIG. 4

FIG. 5

EP 2 341 433 A2

FIG. 6

EP 2 341 433 A2

## FIG. 7

Constructeur de système
ou
Fournisseur de service — 27

Base de données Constructeur et/ou fournisseur **BDCF**

Centre de validation et labellisation — 28

Base de données de validation et/ou labellisation **BDVL**

**CSDi** — 20,21

Base de données centrale - **BDC**

20,22

**CSDa**

Base de données intermédiaire - **BDI**
= une partie virtuelle de BDC

20,22

**CSDa**

Base de données intermédiaire - **BDI**
= une partie virtuelle de BDC

1

Dispositif

Base de données locale - **BDL**

1

Autre dispositif

Base de données locale - **BDL**

▯ - Modules de connexion par câbles ou radio

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2915593